# EUROPEAN PATENT SPECIFICATION

(11) **EP 3 721 400 B1**
(45) Date of publication and mention of the grant of the patent: **19.10.2022**
(21) Application number: 18822215.2
(22) Date of filing: 04.12.2018
(51) Int. Cl.: G06Q 50/02

(54) **DEVICE AND METHOD FOR ITEM LEVEL TRACEABILITY OF CROPS**
VORRICHTUNG UND VERFAHREN ZUR RÜCKVERFOLGBARKEIT VON FELDFRÜCHTEN AUF ARTIKELEBENE
DISPOSITIF ET PROCÉDÉ DE TRAÇABILITÉ DE NIVEAUX D'ÉLÉMENTS DE CULTURES

(30) Priority: 04.12.2017 US 201762594074 P
(43) Date of publication of application: 14.10.2020
(73) Proprietor: Itradenetwork, Inc., Dublin, California 9458 (US)
(72) Inventor: ZHANG, Yonghui, Cupertino, California 95014 (US); VARNI, Jason, Los Altos, California 94022 (US); RUELLO III, Kenneth, San Francisco, California 94108 (US); SLAUGHENHAUPT, Dale, Flower Mound, Texas 75022 (US); BASSETT-SPIERS, Rhonda, Menlo Park, California 94025 (US)
(74) Representative: Zacco Denmark A/S
(86) International application number: PCT/US2018/063744
(87) International publication number: WO 2019/112999

(56) References cited:
- WO-A1-2012/054977
- US-A1- 2014 188 666
- US-A1- 2016 267 416
- US-A1- 2018 165 771
- LUCA MAINETTI ET AL: "An RFID-Based Tracing and Tracking System for the Fresh Vegetables Supply Chain", INTERNATIONAL JOURNAL OF ANTENNAS AND PROPAGATION, vol. 2013, 1 January 2013 (2013-01-01), pages 1-15, XP55554105, ISSN: 1687-5869, DOI: 10.1155/2013/531364

## Description

### BACKGROUND

Specialty crops, such as hand-packaged fresh fruits or produce, may include small berries, such as strawberries, blackberries, blueberries, cherries, etc. Many factors impact consumers' personal experiences consuming a package of small berries. For example, taste, freshness, perceived health effects, origin, color, and brand recognition are some of the more important variables/attributes that may drive consumers' purchasing decisions and consumption patterns. Produce tracing systems for specialty crops are known from WO 2012/05497, US 2016/267416, US 2014/188666, US 2018/165771 and also from LUCA MAINETTI ET AL: "An RFID-Based Tracing and Tracking System for the Fresh Vegetables Supply Chain",INTERNATIONAL JOURNAL OF ANTENNAS AND PROPAGATION, vol. 2013, 1 January 2013 (2013-01-01), pages 1-15,

### BRIEF DESCRIPTION OF THE DRAWINGS

Fig. 1 is a diagram illustrating an environment in which systems and methods described herein may be implemented;
Fig. 2 is a diagram illustrating exemplary network according to an implementation described herein;
Figs. 3A and 3B are simplified rear and front perspective views of an exemplary the personal mobile data collection (PMDC) device of Figs. 1 and 2;
Fig. 3C is a block diagram illustrating exemplary logical components of the of the PMDC device of Figs. 3A and 3B;
Fig. 4 is a block diagram illustrating exemplary logical components of the user device of Figs. 1 and 2;
Fig. 5 is a block diagram illustrating exemplary logical components of the grower portal of Fig. 2;
Fig. 6 is a block diagram illustrating exemplary logical components of the shipper/seller portal of Fig. 2;
Fig. 7 is a block diagram illustrating exemplary logical components of the consumer portal of Fig. 2;
Fig. 8 is a flow diagram illustrating an exemplary process for providing fine-grained item level traceability for specialty crops, according to an implementation described herein;
Fig. 9 illustrates a use case for using the PMDC device of the previous figures;
Fig. 10 is a diagram illustrating exemplary components of a device that may be included the network of Fig. 2; and
Fig. 11 is a flow diagram illustrating another exemplary process for providing fine-grained item level traceability for specialty crops, according to an implementation described herein.

### DETAILED DESCRIPTION OF THE PREFERRED EMBODIMENTS

The following detailed description refers to the accompanying drawings. The same reference numbers in different drawings may identify the same or similar elements.

The ability to apply a uniquely identifiable label to a consumer package (e.g., a clamshell) of berries and trace the entire lifecycle from conception, planting, growing, harvesting, shipping, and eventual travel all the way to the dinner table of a consumer offers many possibilities for consumers to personalize their experiences enjoying the produce. Tracking of labeled produce typically occurs when tracking pallets of produce from a storage location near a harvest site to the eventual market location.

Suppliers also seek to understand how the products that they create, grow, and deliver to the market perform according to the consumption experience of the end consumers. Many factors impact the ultimate performance of a particular package (e.g., clamshell) through a product's entire lifecycle. Being able to collect data at critical stages of the lifecycle against each clamshell - and interpret this data from a number of business perspectives - can add tremendous value to the supplier in their decision-making when trying to optimize their business processes and supply chain relationships.

However, providing traceability information from the actual location and time of a harvesting event (e.g., removing fruit from a particular plant, tree, vine, or small group thereof) provides many challenges. Previous "first mile" traceability attempts have included the use of handheld scanners to read labels on clamshells or trays after harvesting. These handheld scanners typically are used at collection stations at the harvest field or by a designated employee using the scanner some considerable distance from the actual picking location. Such methods fail to capture fine-grained item traceability information that may be used, for example, to detect variations within a single harvest site. Conversely, attempts to collect traceability data at the actual picking location (e.g., within no more than a few feet from where produce is picked) can create an additional burden on harvest workers that reduces productivity and/or increases costs.

For growers, the current dependence on manual labor for harvesting berries and the shortage of skilled farm workers pose a major challenge. A system that can help optimize the harvesting process by properly allocating harvesters on the field, reducing the distances that they walk to fill each tray, reducing the time that they spend walking to return filled trays and waiting in a line for the fruit to be quality inspected, as well as is able to tie the quality inspection in the field with that of in-the-cooler receiving, will prove valuable to both the growers and their harvest crews. Additionally, the systems and methods described herein are designed in such a way that they are non-intrusive to the already laborious harvest activity performed by the harvest workers and introduce nothing more than a simple hand movement for each clamshell that they fill.

The present invention is defined by the subject-matter of the appended claims. Further features of the present invention will become apparent from the following description of exemplary embodiments with reference to the attached drawings

Systems and methods described herein provide fine-grained item level traceability for specialty crops. The systems and methods use an integrated wireless electronic device (referred to herein as a personal mobile data collection device, or PMDC device) assigned to each harvest worker and designed with a form factor and hands-free features to minimize intrusions to typical harvest labor activity. The systems and methods use a mobile computer that wirelessly synchronizes with the PMDC devices to collect data from each harvest worker's PMDC device. The systems and methods also employ a cloud-based computer system that persists, aggregates, and analyzes the data points to derive business values for growers, shippers, suppliers, and consumers.

Descriptions herein may refer to strawberries as an example of a specialty crop. However, systems and method described herein may apply equally to other hand-picked crops, such as other berries, vegetables, nuts, etc., which may be provided to consumers in produce clamshells or other packaging.

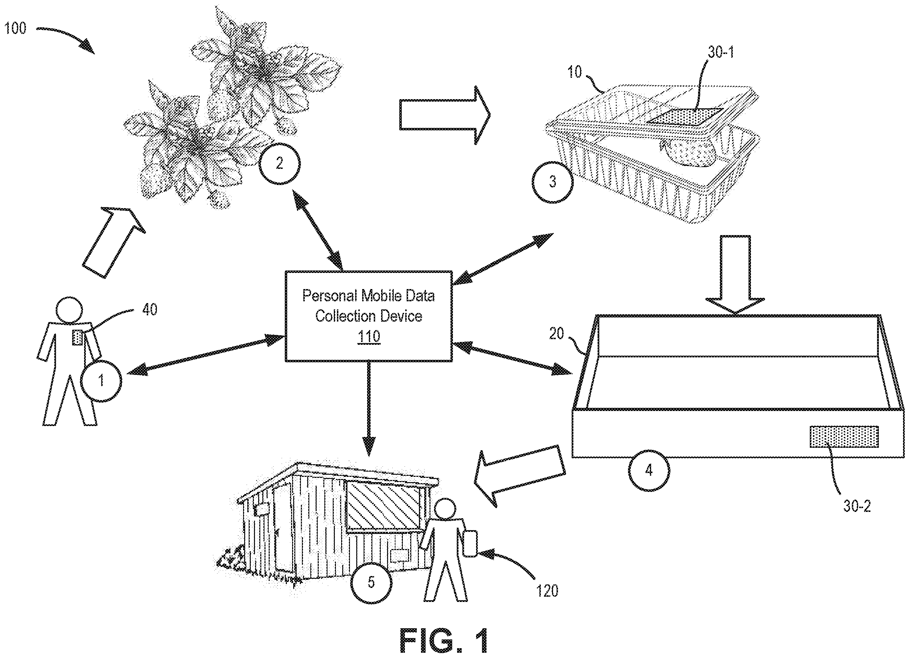

Fig. 1 is a diagram illustrating an environment 100 in which systems and methods described herein may be implemented. Strawberries are typically picked by harvest workers, placed directly into packaging clamshells 10 of different sizes (one pound, two pounds, etc.), and then nested into larger container trays 20 (e.g., of eight one-pound clamshells, of four two-pound clamshells, etc.) to be palletized. Clamshells 10 generally may include any direct-to-consumer packaging, such as plastic packaging with integrated lids, cardboard/paper containers, wooden crates, etc., that can be filled with produce at a harvest event. Clamshells 10 and trays 20 are pre-labeled with barcode labels 30-1 and 30-2 (referred to collectively as a "barcode label 30"). Each barcode label 30 includes a unique item traceability code for tracking. In some work environments, a harvest crew may be provided with pre-nested clamshells 10 and trays 20 delivered to them for picking. Barcode labels 30-1 and 30-2 may have distinct formats or prefixes that allow for distinguishing them as clamshell labels 30-1 and tray labels 30-2. In other work environments, harvest workers may receive trays and clamshells separately and nest them in the field themselves.

According to implementations described herein, barcode labels 30 with the unique item traceability codes are pre-printed and applied to the clamshells. In other implementations, barcode labels 30 may be provided separately and applied to clamshells 10 and/or trays 20 in the field. Each harvest worker may also be provided with a barcode badge 40 including a unique worker ID. In one implementation, barcode labels 30 and barcode badge 40 may be implemented with two-dimensional barcodes, quick response (QR) codes, or other machine-readable codes.

According to implementations described herein, a personal mobile data collection (PMDC) device 110 is provided to each harvest worker that picks produce (shown as strawberries in Fig. 1). PMDC device 110 may be clipped (or otherwise removably fastened) to the harvest worker or a harvest worker's cart (not shown in Fig. 1) and remain with that worker throughout the work shift. PMDC device 110 may collect and/or transfer data regarding multiple different stages of the local harvesting process. As shown in Fig. 1, PMDC device 110 may collect a unique worker ID from a barcode on a worker badge 40 at stage 1. For example, a harvest worker may scan worker badge 40 with PMDC device 110 at the start of a work shift.

At stage 2, PMDC device 110 may identify a location of a worker. For example, PMDC device 110 may identify location coordinates of the harvest worker associated with worker badge 40. At stage 3, PMDC device 110 may associate the location coordinates with a clamshell 10. For example, the harvest worker 10 may scan clamshell 10 before and/or after filling clamshell 10 with berries. For each scan of a clamshell 10, PMDC device 110 may associate the unique item traceability code of clamshell 10 with current location coordinates (or other granular location data). As described further herein, in other implementations, PMDC device 110 may associate additional data, such as current temperature and humidity conditions, with the unique item traceability code of clamshell 10.

At stage 4, tray 20 may be scanned by PMDC device 110. In one implementation, by scanning the unique item traceability code of tray 20, PDMC 110 may associate and/or confirm the association of clamshells 10 with the particular tray 20. The particular order of scanning at stages 1 through 4 is for illustrative purposes. In other implementations, different and/or variable orders may be used.

PMDC device 110 may store scanning and sensor data from stages 1 through 4. In some implementations, PMDC device 110 may store data for multiple trays 20 associated with a single unique worker ID. At stage 5, PMDC device 110 may synchronize and upload data with a client application residing on a user device 120 that has a client application. User device 120 may connect with PMDC device 110 via a wireless personal area network (e.g., using IEEE 802.15 standards or Bluetooth^{®}), wireless local area network (e.g., using IEEE 802.11 standards or Wi-Fi^{®}), a near-field communications (NFC, using, e.g., ISO/IEC 18092 standards) wireless interface, or other wireless or wired interfaces. For example, user device 120 may be stored in a stationary or mobile collection station for trays 20. PMDC device 110 and user device 120 may establish a wireless connection whenever a harvest worker brings PMDC device 110 within signal range of user device 120. In another example, a harvest worker may upload data from PMDC device 110 at the end of each work shift.

User device 120 may collect and store scanning data from multiple PMDC devices 110. As described further herein, user device 120 may send the stored data from PMDC device 110 to a service network either periodically or whenever network access is available.

While Fig. 1 illustrates a particular sequence of stages for data collection during harvesting, in other implementations, different sequences may be used to similar effect. For example, tray labels 30-2 may be scanned with PMDC device 110 before or after worker badge 40 or clamshell labels 30-1. Also, different scanning sequences may be used by different harvest workers with their respective PMDC devices 110. Furthermore, data collected by PMDC devices 110 (and eventually uploaded to user device 120) may be combined with other harvest traceability data to compile an end-to-end traceability record for specialty crops. Thus, systems and methods described herein enable asynchronous data collection for a local harvest event, where the local data can be merged with other crop traceability information (e.g., for shipping, delivery, etc.) at any time to provide a complete record from the harvest location to the store, and eventually to a consumer's table.

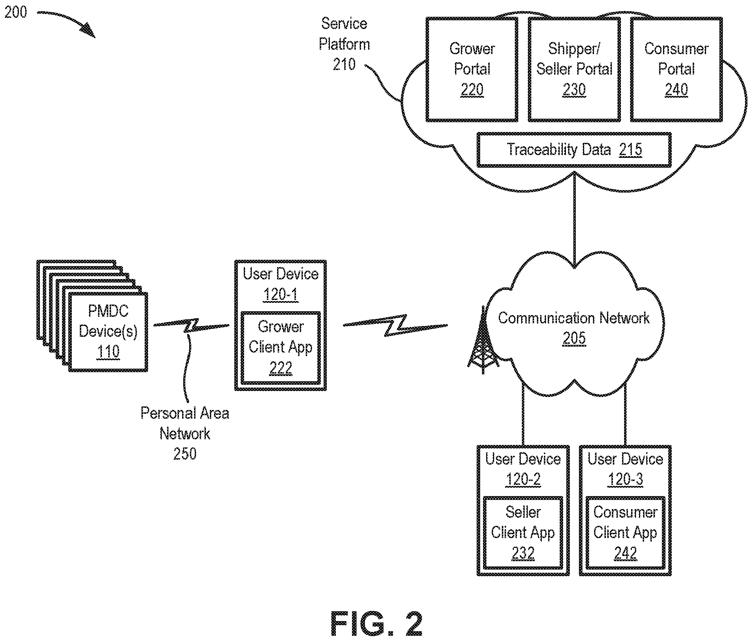

Fig. 2 is a diagram illustrating exemplary network 200 for implementing item level traceability of specialty crops. Network 200 may include PMDC devices 110, user devices 120-1 through 120-3 (referred to herein generically as "user device 120" and collectively as "user devices 120"), an access network 205, and a service platform 210. Service platform 210 may include traceability data 215, a grower portal device 220, a shipper/seller portal device 230, and a consumer portal device 240.

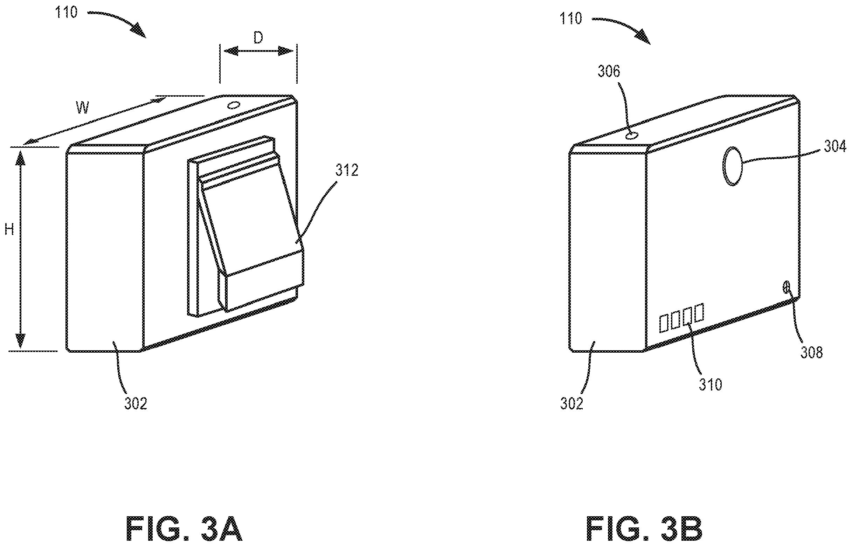

PMDC device 110 may include a compact form factor, as a wearable device or a mobile device that can be clipped to the worker's cart. PMDC device 110 may include electronic sensors, such as location and weather sensors, to provide fine-grained data tracking. PMDC device 110 includes an auto-sensing barcode scanner that detects barcodes (e.g., any type of 2-D barcode presented in range) to allow for hands-free use of PMDC device 110. The functioning of the PMDC device 110 to collect scans (e.g., scan of barcode labels 30-1 and 30-2) is non-intrusive to existing worker behavior. In some examples, PMDC device 110 may take the form of a brooch or other pin-on or clip-on style device that can be attached to a person's clothing or a worker's cart. In another implementation, PMDC device 110 may be a wristband-mounted device (like a wristwatch) or another wearable form factor, such as a pendant style device configured for wearing via a chain or lanyard, an armband-mounted device, etc. PMDC device 110 may include a short-range wireless network capability, without the need for cellular service. PMDC device 110 is described further in connection with, for example, Figs. 3A-3C below.

User device 120 may include a mobile device, such as wireless or cellular telephone device, a smart phone, etc. In another implementation, user device 120 may include any type of mobile computer device or system, such as a personal computer (PC), a laptop, a tablet computer, a personal digital assistant (PDA), a notebook computer, a netbook, etc., that may include communication functionality. Each user device 120 may include multiple different types of wireless communication interfaces, including, for example, a personal area network (PAN) (e.g., Bluetooth^{®}), a wireless local area network (LAN) (e.g., Wi-Fi), and/or a cellular network communication interface. User device 120 may connect to PMDC devices 110 in network 200 via any conventional technique, such as a PAN or LAN. User device 120 and a person associated with user device 120 (e.g., the party holding or using user device 120) may be referred to collectively as user device 120 in the description below.

Each user device 120 may include one or more of a grower client application 222, a seller client application 232, and a consumer client application 242. As described further herein, grower client application 222, seller client application 232, and consumer client application 242 may provide customizable interfaces with service platform 210. For example, grower client application 222 may include application programming interface (API) calls to access features of grower portal 220. Similarly, seller client application 232 may include API calls to access features of shipper/seller portal 230, and consumer client application 242 may include API calls to access features of consumer portal 240.

Communication network 205 may include a plurality of networks of any type, and may be broadly grouped into one or more access networks and one or more backend networks. The access network of communications network 205 provides connectivity between user devices 120 and other network elements within communications network 205. According to an exemplary implementation, the access network includes a radio access network (RAN). The RAN may be a Third Generation (3G) RAN, a Fourth Generation (4G) RAN, a 5G RAN, a future generation wireless network architecture, etc. Depending on the implementation, the access network may include various network elements, such as a base station, a radio network controller (RNC), a femto device, a pico device, a wireless access point, or other type of wireless node that provides wireless access. In aspects where the access network includes a RAN, devices (e.g., user devices 120) may require activation by a service provider to use the access network. The backend network of communications network 205 may exchange data with the access network to provide user devices 120 with connectivity to various servers, gateways, and other network entities, which may include one or more devices in service platform 210. The backend network may include a wide area network (WAN), a metropolitan area network (MAN), an intranet, the Internet, a wireless satellite network, a cable network (e.g., an optical cable network), etc.

Service platform 210 may include one or more network devices or server devices that respond to API calls from user devices 120 and other devices (e.g., devices in partner network 270). An API may use a collection of functions and procedures, referred to as API calls, that can be executed by other applications. For example, as described further herein, service platform 210 may receive API calls from any of grower client application 222, seller client application 232, and consumer client application 242 (e.g., residing on user devices 120) and initiate one or more produce tracking services performed by grower portal 220, shipper/seller portal 230, and/or consumer portal 240. In one implementation, service platform 210 may include logic that allows for validating an API call from user device 120 before performing the produce tracking service associated with the API call.

Traceability data 215 may include a data structure, such as a database, table, or flat file structure, to compile data provided from grower client application 222, seller client application 232, consumer client application 242, or other sources. Traceability data 215 may associate scanned barcode data from a local harvest event (e.g., barcode labels 30) with pallet tracking labels or other shipment labels used in a supply chain. Traceability data 215 may receive data from grower client application 222, seller client application 232, consumer client application 242, or other sources in any sequence (e.g., asynchronously) and compile an ordered end-to-end record down to the clamshell 10 level (e.g., based on clamshell label 30-1). In one implementation, traceability data 215 may include a cloud-based storage system of multiple networked devices. In some implementations, traceability data 215 may be accessed by grower portal 220, shipper/seller portal 230, and consumer portal 240 to response to inquiries and requests (e.g., API calls) from customers of service network 210.

Grower portal device 220 (also referred to simply as "grower portal 220") includes one or more network devices that present an interface to upload data (e.g., collections of data from PMDC devices 110) to traceability data 215 and to access data (e.g., data compilations) from traceability data 215. In one implementation, grower portal device 220 may provide a user interface accessible via a web browser (e.g., on user device 120-1). In another implementation, grower portal device 220 may communicate with grower client application 222 to provide services to user device 120.

Shipper/seller portal device 230 (also referred to simply as "shipper/seller portal 230") includes one or more network devices that present an interface to upload data (e.g., shipping data for palletized produce, etc.) to traceability data 215 and to access data (e.g., end-to-end traceability data) from traceability data 215. In one implementation, shipper/seller portal 230 may provide a user interface that is accessible via a web browser (e.g., on user device 120-2). In another implementation, shipper/seller portal 230 may communicate with seller client application 232 to provide services to user device 120.

Consumer portal 240 (also referred to simply as "consumer portal 240") includes one or more network devices that present an interface to upload data (e.g., consumer ratings and feedback) to traceability data 215 and to access data (e.g., clamshell harvest data) from traceability data 215. In one implementation, consumer portal 240 may provide a user interface that is accessible via a web browser (e.g., on user device 120-3). In another implementation, shipper/seller portal 230 may communicate with consumer client application 242 to provide services to user device 120.

Personal area network 250 may include a wireless personal area network (PAN) interface between PMDC devices 110 and user device 120-1 executing grower client application 222. Wireless PAN(s) 250 includes any type of personal area network carried over a low power, short range wireless protocol such as, for example, Bluetooth ^{®}, Insteon^{®}, IrDA, Wireless USB, Z-Wave, ZigBee, and/or BAN. Wireless PAN(s) 250 may include a single PAN between each PMDC device 110 and a respective user device 120 for transmitting data between them. The reach of each wireless PAN(s) 250 varies from a few centimeters to tens of meters, depending on the specific short range wireless protocol used.

Although Fig. 2 shows exemplary components of network 200, in other implementations, network 200 may include fewer components, different components, differently-arranged components, or additional functional components than depicted in Fig. 2. Additionally or alternatively, one or more components of network 200 may perform functions described as being performed by one or more other components of network 200.

Fig. 3A is a rear perspective view, and Fig. 3B is a front perspective view, of PMDC device 110, according to an implementation. Referring collective to Figs. 3A and 3B, PMDC device 110 may include a housing 302, a lens 304, an output indicator 306, an input device 308, and a speaker 310 to receive a user input, and a fastener 312.

Housing 302 may protect internal components of PMDC device 110 from outside elements. Housing 302 may be made from thermoplastics, metals, elastomers (e.g., synthetic rubber and/or natural rubber), and/or other similar materials. Generally, housing 302 may have relatively small dimensions to permit PMDC device 110 to be easily wearable. For example, in one implementation, the height (H) and width (W) dimensions of PMDC device 110 may each be about three inches, while the depth (D) dimension may be one inch or less.

Lens 304 may enable PMDC device 110 to capture and/or store images (e.g., pictures or video) of a scene/object being viewed through the lens 304, such as an image of produce in a clamshell 10, tray 20, etc. Lens 304 may be associated with a scanner (e.g. a barcode scanner), a camera, or another sensing device. In other implementations, PMDC device 110 may include multiple lenses 304. Output indicator 306 may provide visual information to a user. Output indicator 306 may include a device that can display signals generated by PMDC device 110. For example, output indicator 306 may include one or more colored indicator lights that may indicate progress and/or results of a barcode scan.

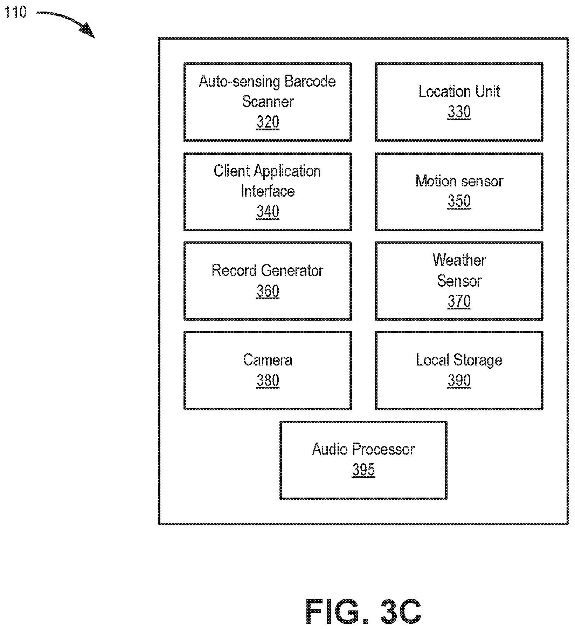

Input device 308 may allow an operator to input information into device PMDC device 110. Input device 308 may include, for example, a control button, a microphone (as shown Fig. 3C), a motion sensor, an audio capture device, and/or another type of input device. Speaker 310 may provide audible information to a user of PMDC device 110. Speaker 310 may include any component capable of transducing an electrical signal to a corresponding sound wave. Fastener 312 may include a type of attachment such as a spring clip (as shown) or band that enables PMDC device 110 to be worn by an associated user or attached to a worker's cart. In other implementations, fastener 312 may include a pin, magnetic clip, link, bendable wire, or the like.

According to other embodiments, PMDC device 110 may comprise fewer components, additional components, different components, and/or a different arrangement of components than those illustrated in Figs. 3A and 3B and described herein.

Fig. 3C is a block diagram illustrating exemplary logical components of PMDC device 110. As shown in Fig. 3C, PMDC device 110 may include an auto-sensing barcode scanner 320, a location unit 330, a client application interface 340, a motion sensor 350, a scan record generator 360, a weather sensor 370, a camera 380, local storage 390, and an audio processor 395.

Auto-sensing barcode scanner 320 may include optical scanners for reading QR codes and/or bar codes. In one implementation, auto-sensing barcode scanner 320 may include, for example, an infrared sensor to enable relatively close-range sensing (e.g., less than 10 centimeters) of QR codes, barcodes, etc. According to an implementation, auto-sensing barcode scanner 320 may automatically detect and scan a barcode without additional user input, such as tapping a trigger button.

Location unit 330 may record location and time tracking associated with PMDC device 110. According to one implementation, location unit 330 may include any type of geo-location unit that can obtain precise geo-location coordinates for a current location of PMDC device 110. For example, location unit 330 may provide geo-location coordinates accurate to within a 16-foot radius. In other implementations, location unit 330 may provide more precise geo-location coordinates. In some implementations, location coordinates may include global positioning system (GPS) information or another form of global navigation satellite system (GNSS) information. Thus, location unit 330 may also include time and date information available from GPS or GNSS (e.g., Coordinated Universal Time (UTC)).

Client application interface 340 may include a wireless interface to detect and automatically upload data from PMDC device 110 to a client application (e.g., grower client application 222) on user device 120. Client application interface 340 may include, for example, a Bluetooth^{®} interface or another PAN 250 interface.

Motion sensor 350 may include an accelerometer, gyroscope, or other type of motion sensing device. In one implementation, motion sensor 350 may detect movement that activates (or wakes up) PMDC device 110 to perform a scan.

Scan record generator 360 may generate scan records for scans of clamshell barcode labels 30-1. For example, when the auto-sensing barcode scanner 320 detects one of the clamshell barcode labels 30-1, scan record generator 360 may create a scan records including a clamshell barcode label value, a most-recent tray barcode label scan value, a most-recent worker barcode badge scan value, a clamshell barcode label scan time (e.g., from location unit 330 or an internal clock), and location information from location unit 330 at the clamshell barcode label scan time. Additionally, scan records may also include data from weather sensor 370 and or camera 380. In other implementations, scan record generator 360 may also generate scan records when a worker badge 40 or a tray label 30-2 is scanned.

Weather sensor 370 may include a sensor that collects weather information. For example, weather sensor 370 may be implemented as a temperature sensor, a humidity sensor, and/or a wind speed sensor to detect weather conditions in the vicinity of PMDC device 110. In other implementations, weather sensor 370 may detect precipitation (e.g., rain, sleet, snow, etc.), pressure, direction, time, location, storm conditions (e.g., moderate, mild, severe, record-breaking, hurricane, etc.), other weather-related metrics/conditions, and/or environmental information.

Camera 380 may include an imaging device, such as a conventional camera or hyperspectral camera. Camera 380 may, for example, obtain images contemporaneously with a barcode scan, such as images of produce in clamshell 10, to collect data for predicative quality analysis.

Local storage 390 may include an internal memory component to collect and store scan data. For example, local storage 390 may store scan records from scan record generator 360. Local storage 390 may also store a current (e.g., most recent) worker badge 40 scan value and a current (e.g., most-recent) tray 30-2 scan value.

Audio processor 395 may perform voice recognition of audible input into input device 308 (e.g., a microphone). In one implementation, audio processor 395 may provide an alternative for of input to auto-sensing barcode scanner 320. For example, audio processor 395 may receive voice commands and use speech recognition to convert command codes to text and store the command codes. In another implementation, audio processor 395 may store a recording of the voice command for later verification.

Although Fig. 3C shows exemplary components of PMDC device 110, in other implementations, PMDC device 110 may include fewer components, different components, additional components, or differently arranged components than depicted in Fig. 3C. For example, PMDC device 110 may include a power source, such as disposable or rechargeable battery (e.g., solar battery, lithium battery, etc.). Additionally or alternatively, one or more components of PMDC device 110 may perform one or more tasks described as being performed by one or more other components of PMDC device 110.

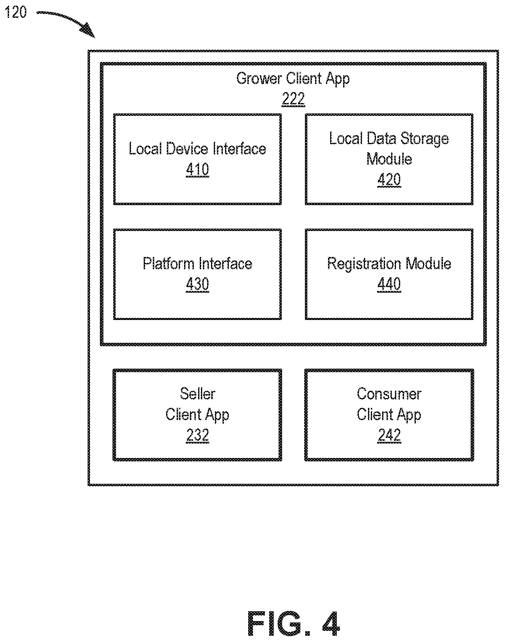

Fig. 4 is a block diagram illustrating exemplary logical components of user device 120. According to an exemplary embodiment, user device 120 provides users with access to one or more of grower portal 220, shipper/seller portal 230, and consumer portal 240.

As shown in Fig. 4, user device 120 may include grower client application 222, seller client application 232, and consumer client application 242. Each of grower client application 222, seller client application 232, and consumer client application 242 may include hardware and software components. The software components may be downloaded, for example, from an application server when user device 110 contacts service platform 210. In other implementations, grower client application 222, seller client application 232, and consumer client application 242 may be provided as part of a webpage, a browser, an operating system, or operating system update.

Grower client application 222 may collect data from PMDC device 110 and upload the collected data to service platform 210 (e.g., traceability data 215). Grower client application 222 may include a local device interface 410, local data storage module 420, a platform interface 430, and a registration module 440.

Local device interface 410 may automatically detect PMDC device 110 and initiate a local wireless connection between user device 120 and PMDC device 110. In one implementation, local device interface 410 may include instructions to initiate the local wireless connection in response to user input to user device 120 for an initial setup or activation of PMDC device 110. Local device interface 410 may obtain scan data from PMDC devices 110 and locally store the scan data in local data storage module 420.

Local data storage module 420 may store data from one or more PMDC devices 110 (e.g., as obtained via local device interface 410) in a local memory of user device 120. In one implementation, local data storage module 420 may configure the data to conform to a particular format and/or to associate the data with a particular grower, user, etc. In one implementation, local data storage module 420 may store data from PMDC devices 110 until platform interface 430 receives confirmation of a successful upload to service platform 210. In other implementations, local data storage module 420 may store data for a configurable interval (e.g., one week). In still another implementation, local data storage module 420 may store a fixed, configurable amount of data that can be overwritten from oldest to newest once the allotted amount of data is reached.

Platform interface 430 may forward data from local data storage module 420 to service platform 210 (e.g., traceability data 215 or another network device). Platform interface 430 may communicate with service platform 210 via a wired or wireless (e.g., cellular, Wi-Fi, etc.) connection. In one implementation, platform interface 430 may use an Internet Protocol (IP) address to conduct secure communications with service platform 210. Platform interface 430 may forward data from local data storage module 420, for example, at periodic intervals, on demand, or whenever network access is available. Thus, in some cases where a harvest location is not accessible to communications network 205, data forwarded from platform interface 430 to service platform 210 may lag hours or days behind shipping or other traceability data for a specialty crop.

Registration module 440 may register user device 120 for access to data services offered by service platform 210 (e.g., services of grower portal 220 that apply traceability data 215). For example, registration module 440 may provide a user interface to enable user of user device 120 to authorize scan data uploads by grower client application 222. Registration module 410 may solicit user credentials (e.g., a client ID and password) for a growers network account. In one aspect, registration module 440 may also solicit a user's or corporate owner's email or messaging address to facilitate off-line notifications. Upon receipt of the credentials, registration module 440 may activate grower client application 222 to collect and upload data from PMDC devices 110.

In one implementation, seller client application 232 may collect tracking data of clamshells 10 and/or trays 20. For example, seller client application 232 may include an interface to scan barcode labels 30 and associate a scan with a time and/or a location, such as a time or location associated with a shipping or storage event of trays 20 or pallets including multiple trays 20. Seller client application 232 may upload tracking data to traceability data 215. In another implementation, seller client application 232 may provide access to services based on information in traceability data 215, such as services provided by shipper/seller portal 230.

Consumer client application 242 may provide access to services based on information in traceability data 215, such as services provided by consumer portal 240. In one implementation, consumer client application 242 may include an interface to scan barcode labels 30, such as labels on individual clamshells 10. Seller client application 232 may upload scan data from to consumer portal. For example, scan data may be used to provide a unique barcode number that can be associated with packing and shipping records for a corresponding clamshell.

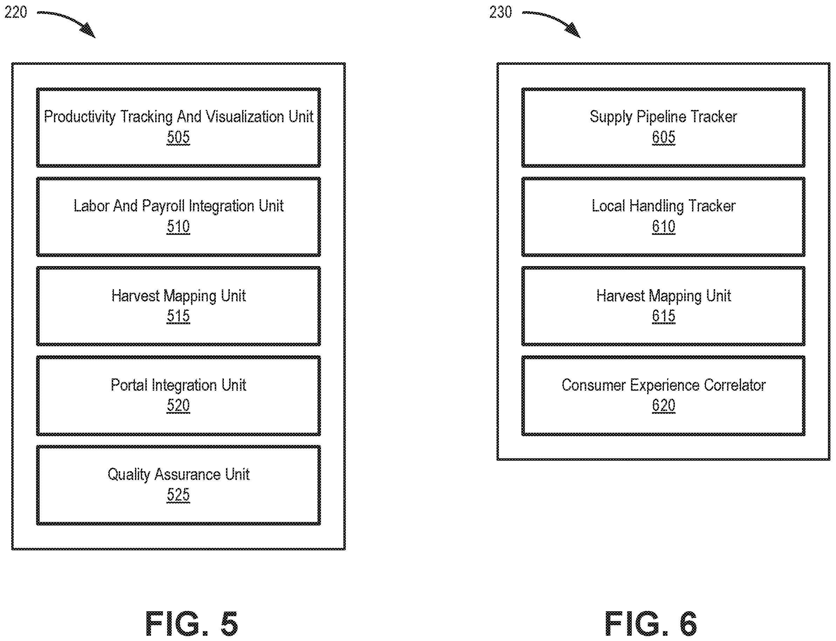

Fig. 5 is a block diagram illustrating exemplary logical components of grower portal 220. Grower portal 220 may apply data stored in traceability data 215 to facilitate data services for growers/harvesters. Based on the availability of data from PMDC devices 110 and grower client application 222, grower portal 220 may provide services based on real-time data. In one implementation, grower portal 220 may include a productivity tracking and visualization unit 505, labor and payroll integration unit 510, harvest mapping unit 515, portal integration unit 520, and quality assurance unit 525.

Productivity tracking and visualization unit 505 may provide real-time individual level productivity tracking and visualization. For example, the number of clamshells 10 and/or trays 20 for an individual worker (e.g., a worker using PMDC device 110) may be tracked for any selected period (e.g., hourly, daily, weekly, etc.). In one implementation, grower portal 220 may also generate graphical representations of productivity data and/or comparison data with other workers. In another implementation, pick duration, pick paths, distances walked to collection points, distance moved between scanning clamshells, etc. may be calculated and used for productivity analysis and harvest planning.

Labor and payroll integration unit 510 may provide labor tracking and data integration with a payroll system. For example, production quotas and bonuses tied to production may be associated with individual workers and provided to payroll systems that generate paychecks. For hourly labor, labor and payroll integration 510 may log/verify scan entries from PMDC devices 110 with time clock entries and/or worker schedules.

Harvest mapping unit 515 may use GPS location data from PMDC device 110 scans, along with geo-fencing, to identify fruit varieties for each clamshell 10. For example, rows or sections of a field may be divided into different plant varieties (e.g., varieties for different produce size, flavor, yield, etc.). Harvest mapping unit 515 may include a geographic map that identifies the boundaries of each variety. With the geographic map, scan data from PMDC device 110 scans may be used to associate each clamshell 110 with a plant variety based on the scan location and geographic map.

Portal integration unit 520 may interface with other systems to combine and/or share harvest data. For example, precision harvest data may be integrated with other grower portal software (e.g., including, but not limited to, resource management portals, shipper/seller portal 230, and consumer portal 240) to measure performance of farms, fields and lots, and fine tune other aspects of farming practices.

Quality assurance unit 525 may provide guidance to track and mange quality assurance procedures at the harvest worker level. In one implementation, quality assurance 525 may provide a streamlined quality inspection process that allows decoupled, random sampling of trays 20 and systematic measurement of the quality of work by individual workers.

Although Fig. 5 shows exemplary units of grower portal 220, in other implementations, grower portal 220 may include fewer units, different units, or additional units, than depicted in Fig. 5. For example, other functionalities may be built using the rich set of data collected for each clamshell 10 by each individual harvest worker.

Fig. 6 is a block diagram illustrating exemplary logical components of shipper/seller portal 230. Shipper/seller portal 230 may apply data stored in traceability data 215 to facilitate data services for shippers and sellers of tracked produce. Based on the availability of shipping data (e.g., from seller client application 232 and other sources), shipper/seller portal 230 may add shipping data to harvest data (e.g., from PMDC device 110) and provide services based on real-time data. With precise and quality data collected for each clamshell 10 and being able to associate clamshells 10 to trays 20, to pallets and finally shipments, shippers and marketers gain powerful tools to measure the throughput and quality of their grower partners. In one implementation, shipper/seller portal 230 may include a supply pipeline tracker 605, a local handling tracker 610, a harvest mapping unit 615, and consumer experience correlator 620.

Supply pipeline tracker 605 may provide real-time measurement of supply pipelines at the time of harvest. Supply pipeline tracker 605 may provide accurate estimates of time to market based on current shipping data. Supply pipeline tracker 605 may also provide detailed logistical tracking across the entire lifecycle of a clamshell 10 of produce after harvest. For example, by associating a clamshell 10 with a pallet in traceability data 215, an individual clamshell 10 may be tracked from the harvest location to the store, and eventually to a consumer's table.

Local handling tracker 610 may provide precise tracking of "cut-to-cool" time down to individual clamshell 10 levels. For example, using scan data from PMDC device 110, a pick time for produce placed in clamshell 10 may be logged to within minutes of separation from the plant. The clamshell 10 is associated with tray 20 through another scan by PMDC device 110. Tray 20 may be associated with a pallet or scanned individually when placed in a refrigeration unit, and each tracking scan may be logged into traceability data 215. Thus, local handling tracker 610 may extract a first PMDC device 110 scan for a tray 20 with a refrigeration location scan to determine cut-to-cool time for an individual tray 20. In one implementation, quality control evaluation clamshells 10 with data from local handling tracker 610 may be used to establish common quality standards between cooler receiving and grower harvest (e.g., correlating harvest temperatures and cut-to-cool times).

Similar to harvest mapping unit 515, harvest mapping unit 615 may use GPS location data from PMDC device 110 scans, along with geo-fencing, to identify fruit varieties for each clamshell 10. For example, rows or sections of a field may be divided into different plant varieties (e.g., varieties for different produce size, flavor, yield, etc.). With a geographic map that identifies the boundaries of each variety, scan data from PMDC device 110 scans may be used to associate each clamshell 110 with a plant variety based on the scan location and geographic map.

Consumer experience correlator 620 may provide a correlation of consumer experience/feedbacks with harvest data. Particularly, consumer feedback (e.g., via consumer client application 242) may be associated with a particular clamshell 10. Thus, harvesting activities that may lead to positive or negative feedback may be traced back to individual harvest events and workers.

Although Fig. 6 shows exemplary units of shipper/seller portal 230, in other implementations, shipper/seller portal 230 may include fewer units, different units, or additional units, than depicted in Fig. 6. For example, other functionalities may provide shippers and sellers with additional information for each clamshell 10 that is provided from a harvest location.

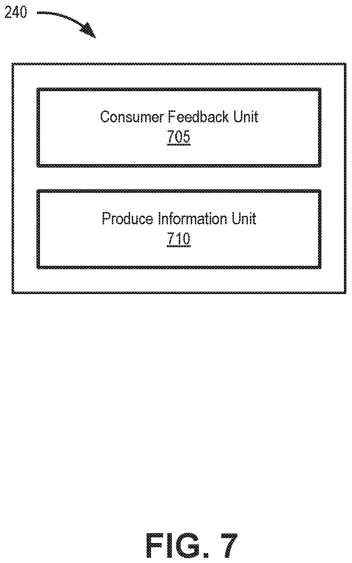

Fig. 7 is a block diagram illustrating exemplary logical components of consumer portal 240. Consumer portal 240 may apply data stored in traceability data 215 to facilitate data services for consumers of produce from a harvest location. Based on the availability of shipping data (e.g., from seller client application 232 and other sources) and harvest data (e.g., from PMDC device 110), consumer portal 240 provide consumer information services for clamshell produce based on real-time data. For example, consumer portal 240 may receive an inquiry regarding one of the labels 30-1 on one of clamshells 10, and retrieve, in response to the inquiry, information about the one of the produce clamshells based on the scan records from PMDC device 110. In one implementation, consumer portal 240 may include a consumer feedback unit 705 and a produce information unit 710.

Consumer feedback unit 705 may provide an interface for a consumer to provide feedback for a particular clamshell. For example, by using consumer client application 242 to scan a barcode label 30, consumer feedback unit 705 may provide a questionnaire or form to solicit consumer feedback specifically associated with a corresponding clamshell 10. Inputs received by consumer feedback unit 705 may be used by consumer experience correlator 620, for example, to correlated feedback with a particular harvest event, worker, etc.

Produce information unit 710 may provide information to a consumer regarding harvest events for a particular clamshell 10. For example, by using consumer client application 242 to scan a barcode label 30, produce information unit 710 may associate the barcode label 30 with a particular clamshell 10 data in traceability data 215. Thus, particular harvest locations, plant varieties, date/time of harvesting, or information about individual workers that picked the produce of clamshell 10 may be viewed by a consumer.

Although Fig. 7 shows exemplary units of consumer portal 240, in other implementations, consumer portal 240 may include fewer units, different units, or additional units, than depicted in Fig. 7. For example, other functionalities may provide consumers with additional information for each clamshell 10 that is provided to a consumer.

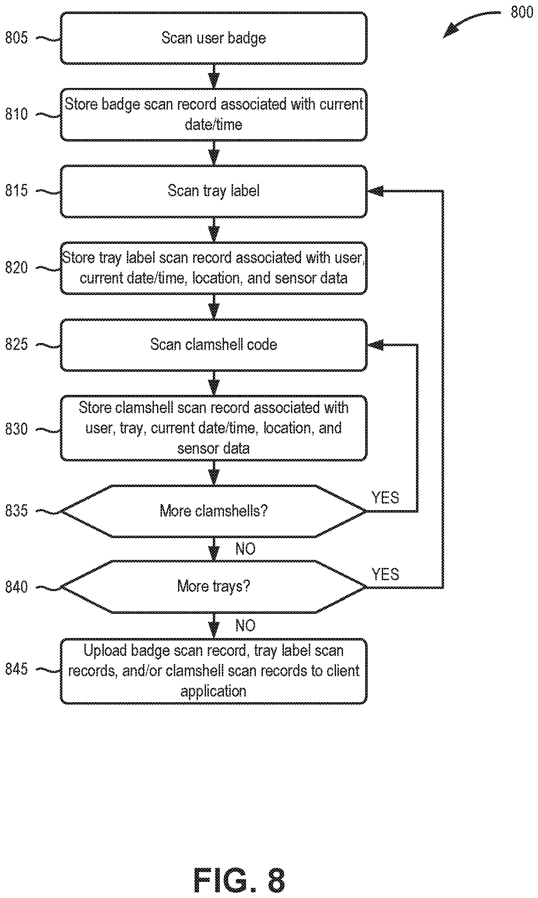

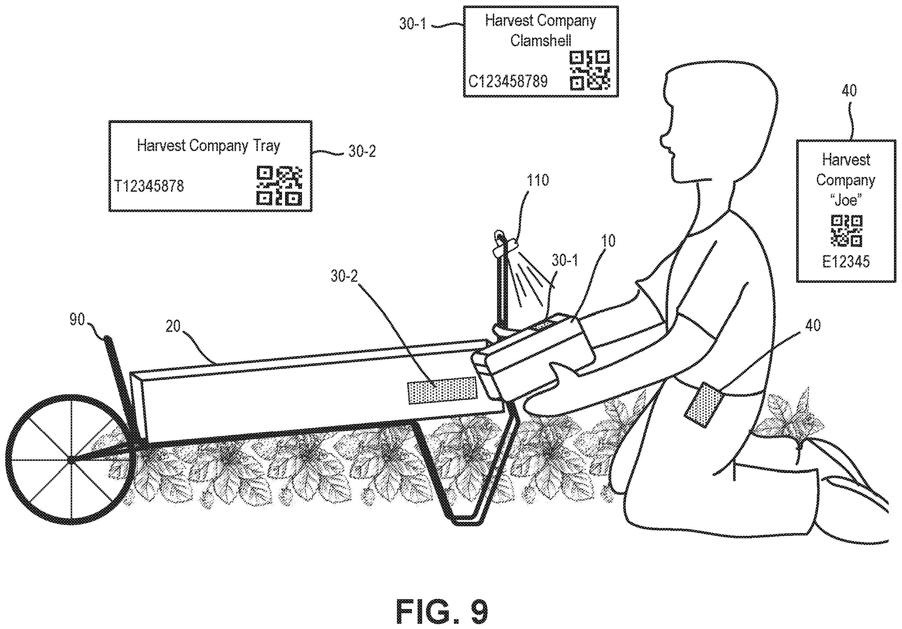

Fig. 8 is a flow diagram illustrating an exemplary process 800 for providing fine-grained, item level traceability for specialty crops using PMDC device 110, according to an implementation described herein. In one implementation, process 800 may be implemented by PMDC device 110. In another implementation, process 800 may be implemented by PMDC device 110 in conjunction with one or more other devices in network environment 200, such as user device 120-1. Some process blocks of Fig. 8 are described below in the context of Fig. 9, which illustrates an environment for using PMDC device 110 where a harvest worker loads a filled clamshell 10 into a tray 20 supported by a cart 90. A PMDC device 110 is shown removably attached to cart 90, with enlargements of labels 30-1, 30-2 and worker badge 40 also shown.

Referring to Fig. 8, process 800 may include scanning a user badge (block 805) and storing a badge scan record associated with a current date and time (block 810). For example, referring to Fig. 9, a harvest worker may begin a work shift by scanning worker badge 40. PMDC device 110 may automatically detect worker badge 40, including a barcode presented before auto-sensing barcode scanner 320. PMDC device 110 may read the barcode and associate the barcode information with a time and date (e.g., from location unit 330 or an internal clock). In other implementations, PMDC device 110 may also associate the barcode information with a current location (e.g., from location unit 330), weather data (e.g., temperature and/or humidity from weather sensor 370), and/or other information. PMDC device 110 may locally store the barcode information, the date/time, the location, and/or the weather data as a worker badge scan record in scan record generator 360. In another implementation, PMDC device 110 may simply store a most recent badge scan as the current/active user for subsequent tray and clamshell scans.

Referring to Fig. 8, process 800 may also include scanning a tray label (block 815) and storing a tray label scan record associated with the user, the current date/time, the location, and/or sensor data (block 820). For example, a worker may position barcode label 30-2 in front of PMDC device 110 before placing tray 20 on cart 90. Auto-sensing barcode scanner of 320 of PMDC device 110 may automatically detect barcode label 30-2. PMDC device 110 may read barcode label 30-2 on tray 20 and associate the barcode information with the worker badge code (as stored in process block 810), the scan time and date (e.g., from location unit 330 or an internal clock), a current location (e.g., from location unit 330), and current weather data (e.g., temperature and/or humidity from weather sensor 370). PMDC device 110 may locally store the tray barcode information, the user badge information, the date/time, the location, and the weather data as a tray label scan record in scan record generator 360. In another implementation, PMDC device 110 may simply store a most recent tray scan as the current/active tray for subsequent clamshell scans.

Process 800 may further include scanning a clamshell label (block 825) and storing a clamshell label scan record associated with the worker code, the tray code, the current date/time, the location, and sensor data (block 830). For example, as shown in Fig. 9, a worker may position barcode label 30-1 in front of PMDC device 110 before placing clamshell 10 into tray 20. Auto-sensing barcode scanner 320 of PMDC device 110 may automatically detect barcode label 30-1. In one implementation, the physical attachment location of PMDC device 110 on cart 90 allows for scanning of barcode label 30-1 with minimal additional motion of the worker as clamshell 10 is placed into tray 20. PMDC device 110 may read barcode label 30-1 on clamshell 10 and associate the barcode information with the previously-scanned tray label 30-2, the worker badge code (as stored in process block 810), the scan time and date (e.g., from location unit 330 or an internal clock), a current location (e.g., from location unit 330), and current weather data (e.g., temperature and/or humidity from weather sensor 370). Record generator 360 may locally store the clamshell barcode information, the tray barcode information, the user badge information, the date/time, the location, and the weather data as a clamshell scan record in local storage 390.

If more clamshells are associated with a tray (block 835 - YES), process 800 may return to process block 825. For example, a worker may use PMDC device 110 to scan barcode labels 30-1 on additional clamshells 10 (e.g., as a worker fills a single tray 20 with multiple clamshells 10).

If no more clamshells are associated with a tray (block 835 - NO), process 800 may proceed to determine if there are more trays (block 840). If there is another tray (block 840 - YES), process 800 may return to process block 815 to scan another tray. For example, when a tray is full, a worker may use PMDC device 110 to scan barcode labels 30-2 on a new tray 20 and begin to fill tray 20 with a new set of clamshells 10 to be associated with that tray 20.

If there are no more trays (block 840 - NO), process 800 may proceed to upload the badge scan record, the tray label scan records, and the clamshell scan records from the local storage to a client application (block 845). For example, a worker using PMDC device 110 may come within range of a PAN for user device 120-1 (e.g., when cart 90 is used to deliver tray 20 to a collection station, or at the end of the worker's shift). PMDC device 110 may pair with user device 120-1 and automatically upload stored records from scan record generator 360 to grower client application 222.

In other implementations, clamshells 10 with clamshell labels 30-1 may be sequenced and nested in trays 20. Label 30-1 sequences may be associated with particular tray labels 30-2 (e.g., in grower client application 222). Thus, harvest workers may scan a tray label 30-2 and the sequence of clamshell labels 30-1 may automatically be associated with the corresponding tray label 30-2 when PMDC device 110 synchronizes with grower client application 222.

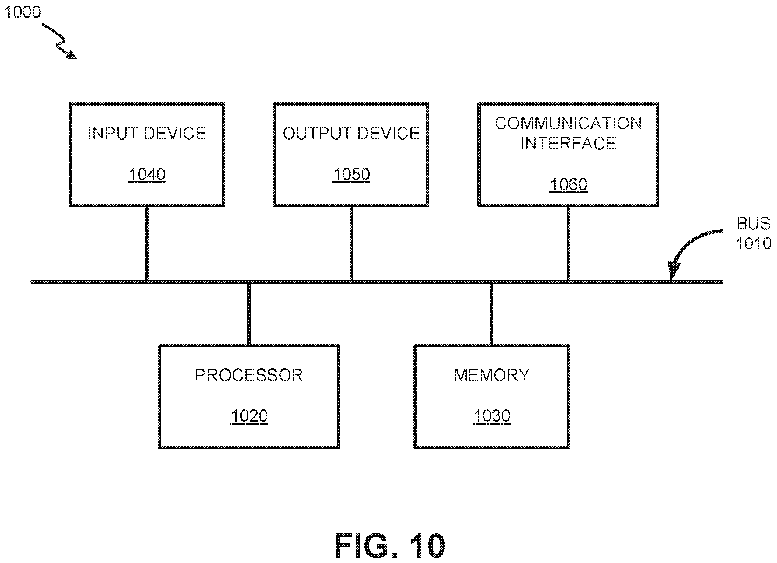

Fig. 10 is a diagram illustrating example components of a device 1000 according to an implementation described herein. User device 120, grower portal 220, shipper/seller portal 230, and consumer portal 240 may each include one or more devices 1000. As shown in Fig. 10, device 1000 may include a bus 1010, a processor 1020, a memory 1030, an input device 1040, an output device 1050, and a communication interface 1060.

Bus 1010 may include a path that permits communication among the components of device 1000. Processor 1020 may include any type of single-core processor, multi-core processor, microprocessor, latch-based processor, and/or processing logic (or families of processors, microprocessors, and/or processing logics) that interprets and executes instructions. In other embodiments, processor 1020 may include an application-specific integrated circuit (ASIC), a field-programmable gate array (FPGA), and/or another type of integrated circuit or processing logic.

Memory 1030 may include any type of dynamic storage device that may store information and/or instructions, for execution by processor 1020, and/or any type of nonvolatile storage device that may store information for use by processor 1020. For example, memory 1030 may include a random access memory (RAM) or another type of dynamic storage device, a read-only memory (ROM) device or another type of static storage device, a content addressable memory (CAM), a magnetic and/or optical recording memory device and its corresponding drive (e.g., a hard disk drive, optical drive, etc.), and/or a removable form of memory, such as a flash memory.

Input device 1040 may allow an operator to input information into device 1000. Input device 1040 may include, for example, a keyboard, a mouse, a pen, a microphone, a remote control, an audio capture device, an image and/or video capture device, a touch-screen display, and/or another type of input device. In some embodiments, device 1000 may be managed remotely and may not include input device 1040. In other words, device 1000 may be "headless" and may not include a keyboard, for example.

Output device 1050 may output information to an operator of device 1000. Output device 1050 may include a display, a printer, a speaker, and/or another type of output device. For example, device 1000 may include a display, which may include a liquid-crystal display (LCD) for displaying content to the customer. In some embodiments, device 1000 may be managed remotely and may not include output device 1050. In other words, device 1000 may be "headless" and may not include a display, for example.

Communication interface 1060 may include a transceiver that enables device 1000 to communicate with other devices and/or systems via wireless communications (e.g., radio frequency, infrared, and/or visual optics, etc.), wired communications (e.g., conductive wire, twisted pair cable, coaxial cable, transmission line, fiber optic cable, and/or waveguide, etc.), or a combination of wireless and wired communications. Communication interface 1060 may include a transmitter that converts baseband signals to radio frequency (RF) signals and/or a receiver that converts RF signals to baseband signals. Communication interface 1060 may be coupled to an antenna for transmitting and receiving RF signals.

Communication interface 1060 may include a logical component that includes input and/or output ports, input and/or output systems, and/or other input and output components that facilitate the transmission of data to other devices. For example, communication interface 1060 may include a network interface card (e.g., Ethernet card) for wired communications and/or a wireless network interface (e.g., a Wi-Fi) card for wireless communications. Communication interface 1060 may also include a universal serial bus (USB) port for communications over a cable, a Bluetooth^{®} wireless interface, a radio-frequency identification (RFID) interface, a near-field communications (NFC) wireless interface, and/or any other type of interface that converts data from one form to another form.

As described in detail above, device 1000 may perform certain operations relating to providing item-level traceability services for specialty crops. Device 1000 may perform these operations in response to processor 1020 executing software instructions contained in a computer-readable medium, such as memory 1030. A computer-readable medium may be defined as a non-transitory memory device. A memory device may be implemented within a single physical memory device or spread across multiple physical memory devices. The software instructions may be read into memory 1030 from another computer-readable medium or from another device. The software instructions contained in memory 1030 may cause processor 1020 to perform processes described herein. Alternatively, hardwired circuitry may be used in place of, or in combination with, software instructions to implement processes described herein. Thus, implementations described herein are not limited to any specific combination of hardware circuitry and software.

Although Fig. 10 shows exemplary components of device 1000, in other implementations, device 1000 may include fewer components, different components, additional components, or differently arranged components than depicted in Fig. 10. Additionally or alternatively, one or more components of device 1000 may perform one or more tasks described as being performed by one or more other components of device 1000.

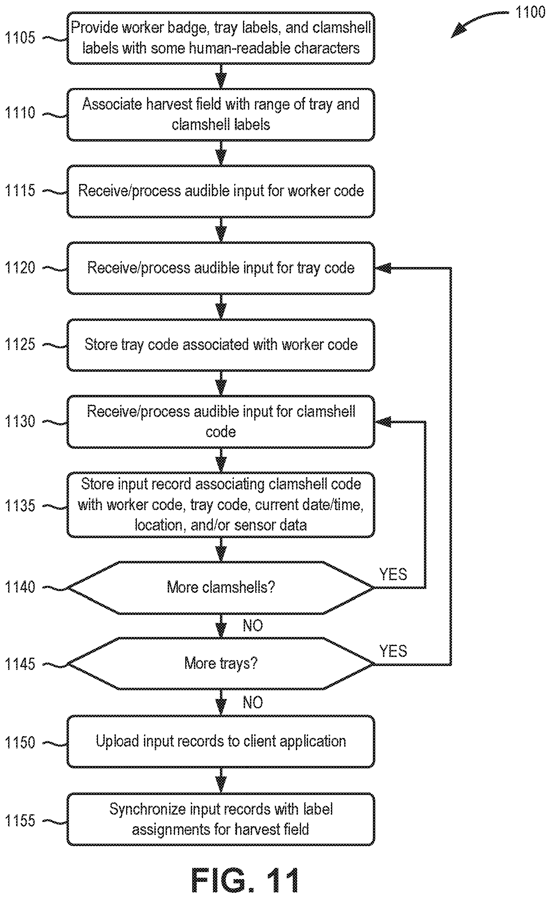

Fig. 11 is a flow diagram illustrating an exemplary process 1100 for providing fine-grained item level traceability for specialty crops using PMDC device 110, according to an another implementation described herein. More particularly, process 1100 may implement audible input to replace barcode scanning with PMDC device 110. In one implementation, process 1100 may be implemented by PMDC device 110. In another implementation, process 1100 may be implemented by PMDC device 110 in conjunction with one or more other devices in network environment 200, such as user device 120-1.

Process 1100 may include providing a worker badge, tray labels, and clamshell labels with at least some human-readable characters (block 1105) and associating a harvest field with a range of tray and clamshell codes (block 1110). Process blocks 1105 and 1110 may be considered preliminary steps to set up use of PMDC device 110 with audible input. For example, tray and item codes (e.g., barcode labels 30-1 and 30-2) may be generated with base-36 alphanumeric characters (i.e., A-Z and 0-9). The last three or four characters on clamshell label 30-1 and tray label 30-2 may be exposed as human readable characters (e g., "A7F"). Use of three exposed characters provides 46,656 unique combinations to minimize code clashing, while user of four characters provides 1,679,616 unique combinations. A block of pre-labeled trays and clamshells with unique three- or four-character exposed code portions may be assigned to a particular harvest field, with the assigned range of labels recorded, for example, in traceability data 215 or grower client application 222.

Process 1100 may also include receiving and processing an audible input for a worker code (block 1115). For example, a worker badge code may be associated with PMDC device 110 through a voice command including the characters of worker badge 40 (e.g., "Picker 102"). In one implementation, a control button on PMDC device 110 may be tapped to activate input device 308 (e.g., a microphone) and/or audio processor 395 before providing the voice command. Audio processor 395 may receive the voice command and use speech recognition to convert the code to text and store the worker code. In another implementation, audio processor 395 may store the voice command for later verification.

Process 1100 may further include receiving and processing audible input for a tray code (block 1120) and storing the tray code associated with the worker code (block 1125). For example, a harvest worker may receive a pre-labeled tray 20 with a set of pre-labeled clamshells 10. The worker may associate the tray label code with PMDC device 110 through a voice command including the exposed characters of tray label 30-2 (e.g., "Tray A6B"). In one implementation, a control button on PMDC device 110 may be tapped to activate input device 308 (microphone) and/or audio processor 395 before providing the voice command. Audio processor 395 may receive the voice command and use speech recognition to convert the portion of the tray code to text and store the tray code portion associated with the worker code.

Process 1100 may additionally include receiving and processing audible input for a clamshell code (block 1130) and storing the clamshell code associated with the worker code, the tray code, a current date/time, a location, and sensor data (block 1135). For example, the worker may give a voice command including the exposed characters of clamshell label 30-1 (e.g., "Clamshell XP7"). In one implementation, a control button on PMDC device 110 may be tapped to activate input device 308 (microphone) and/or audio processor 395 before providing the voice command. Audio processor 395 may receive the voice command and use speech recognition to convert the portion of the clamshell code to text. Scan record generator 360 may associate the portion of the clamshell code with the previously-received tray code from tray label 30-2, the worker badge code (as stored in process block 1115), the command time and date (e.g., from location unit 330 or an internal clock), a current location (e.g., from location unit 330), and current weather data (e.g., temperature and/or humidity from weather sensor 370). Scan record generator 360 may locally store the clamshell barcode information, the tray barcode information, the user badge information, the date/time, the location, and the weather data as a clamshell record in local storage 390.

If more clamshells are associated with a tray (block 1140 - YES), process 1100 may return to process block 1130. For example, a worker may use PMDC device 110 to input voice commands with exposed characters of other clamshell labels 30-1 (e.g., as a worker fills a single tray 20 with multiple clamshells 10.

If no more clamshells are associated with a tray (block 1140 - NO), process 1100 may proceed to determine if there are more trays (block 1145). If there is another tray (block 1145 - YES), process 1100 may return to process block 1120 to receive another tray codc. For example, when a tray 20 is full, a worker may use PMDC device 110 to input the exposed characters of label 30-2 on a new tray 20 and begin to fill tray 20 with a new set of clamshells 10 to be associated with that tray 20.

If there are no more trays (block 1145 - NO), process 1100 may proceed to upload the input records from the local storage to a client application (block 1150). For example, a worker using PMDC device 110 may come within range of a PAN for user device 120-1 (e.g., when cart 90 is used to deliver tray 20 to a collection station, or at the end of the worker's shift). PMDC device 110 may pair with user device 120-1 and automatically upload stored records from scan record generator 360 to grower client application 222.

Process 1100 may further include synchronizing the input records with label assignments for the harvest field (block 1155). For example, upon receiving the input records, grower client application 222 may parse the portion of the tray codes (from block 1120) and clamshell codes (from block 1130), do a reverse lookup based on the range of labels assigned for the harvest field, and associate each tray and clamshells with a complete barcode label 30-1/30-2.

As described above in connection with, for example, Fig. 2, grower client application 222 may store and eventually upload data from one or PMDC devices 110 when a connection with communication network 205 is available. Thus, voice-base commands may be used in lieu of barcode scans with PMDC device 110. Minimal vocabulary (e.g., simple keywords such as "Tray," "Picker," alphabets and digits, in English or Spanish) allows for accurate speech recognition on PMDC device 110 and easy staff training.

Systems and methods described herein provide fine-grained item level traceability for specialty crops. A wireless electronic device (e.g., PMDC device 110) includes an auto-sensing barcode scanner to detect a worker barcode badge 40, tray barcode labels on trays 20, and clamshell barcode labels on produce clamshells 10 that nest in the trays 20. The wireless electronic device also includes a location determining unit and a record generator to generate scan records when the auto-sensing barcode scanner detects one of the clamshell barcode labels. Each of the scan records includes a clamshell barcode label value, a most-recent tray barcode label scan value, a most-recent worker barcode badge scan value, a clamshell barcode label scan time, and location information from the location determining unit at the clamshell barcode label scan time. The wireless electronic device also includes a local memory to store the scan records and a wireless client application interface to automatically upload the scan records when the wireless electronic device detects a network connection with a client application. The wireless electronic device may include a fastener to removably secure the wireless electronic device to a person or object for hands-free operation.

The systems and methods may further include a mobile computing device (e.g., user device 120). The mobile computing device may include a memory to store instructions and the client application, and a processors to execute the instructions in the memory to automatically detect a network connection with the wireless electronic device; receive, after the detecting, the scan records uploaded from the wireless electronic device; store, in the memory, the scan records, and forward, to a network device, the scan records.

The systems and methods may additionally include a network device (e.g., consumer portal device 240). The network device may include a memory to store instructions and a processor to execute the instructions in the memory to store tray tracking information, from other devices, associating barcode labels on the tray with a shipping pallet; store pallet tracking information, from the other devices, regarding the pallet; associate the scan records with the pallet tracking information; receive an inquiry regarding one of the barcode labels on the produce clamshell; and retrieve, in response to the inquiry, information about the produce clamshell based on the scan records from the wireless electronic device.

The foregoing description of implementations provides illustration and description, but is not intended to be exhaustive or to limit the invention to the precise form disclosed. Modifications and variations are possible in light of the above teachings or may be acquired from practice of the invention. For example, while a series of blocks have been described with regard to Figs. 8 and 11, the order of the blocks and message/operation flows may be modified in other embodiments. Further, non-dependent blocks may be performed in parallel.

Certain features described above may be implemented as "logic" or a "unit" that performs one or more functions. This logic or unit may include hardware, such as one or more processors, microprocessors, application specific integrated circuits, or field programmable gate arrays, software, or a combination of hardware and software.

Use of ordinal terms such as "first," "second," "third," etc., in the claims to modify a claim element does not by itself connote any priority, precedence, or order of one claim element over another, the temporal order in which acts of a method arc performed, the temporal order in which instructions executed by a device are performed, etc., but are used merely as labels to distinguish one claim element having a certain name from another element having a same name (but for use of the ordinal term) to distinguish the claim elements.

No element, act, or instruction used in the description of the present application should be construed as critical or essential to the invention unless explicitly described as such. Also, as used herein, the article "a" is intended to include one or more items. Further, the phrase "based on" is intended to mean "based, at least in part, on" unless explicitly stated otherwise.

In the preceding specification, various preferred embodiments have been described with reference to the accompanying drawings. It will, however, be evident that various modifications and changes may be made. The invention is defined by the independent claims. The dependent claims define advantageous embodiments

## Claims

1. A wireless electronic device (110), comprising:
an auto-sensing barcode scanner (320) configured to detect worker barcode badges, detect tray barcode labels on trays, and detect clamshell barcode labels on produce direct-to-consumer packaging (10) that is stored in the trays;
a location determining unit (330);
a local memory unit (390) configured to store a most-recent scanned worker badge value and most-recent scanned tray label value;
a record generator (360) configured to generate scan records when the auto-sensing barcode scanner detects one of the clamshell barcode labels, each of the scan records including a clamshell barcode label value, the most-recent scanned tray label value associated with the clamshell barcode label value, the most-recent scanned worker barcode badge value, a clamshell barcode label scan time, and location information from the location determining unit at the clamshell barcode label scan time, wherein the local memory unit is further configured to store the scan records;
a wireless client application interface (340) to automatically upload the scan records when the wireless electronic device detects a network connection with a client application; and
a fastener (312) to removably secure the wireless electronic device to a person or object.

2. The wireless electronic device of claim 1, further comprising a weather sensor (370) to detect weather conditions in a vicinity of the wireless electronic device, and wherein the scan records further include weather conditions at the clamshell barcode label scan time.

3. The wireless electronic device of claim 2, wherein the weather sensor includes at least one of a temperature sensor or a humidity sensor.

4. The wireless electronic device of claim 1, further comprising a camera (380), wherein the scan records further include an image of produce in the direct-to consumer packaging to which the clamshell barcode label is affixed.

5. The wireless electronic device of claim 4, wherein the camera includes a hyperspectral camera.

6. A system, comprising
a wireless electronic device (110) according to claim 1;
a mobile computing device (120) including:
a first memory (1030) to store instructions and a client application, and
a first processor (1020) to execute the instructions in the first memory to:
automatically detect a network connection with the wireless electronic device,
receive, after the detecting, the scan records transmitted from the wireless electronic device,
store, in the first memory, the scan records, and
forward, to a network device, the scan records; and
the network device (230) including:
a second memory (1030) to store second instructions, and
a second processor ( 1020) to execute the instructions in the second memory to:
store tray tracking information, from other devices, associating barcode labels on the tray with a shipping pallet,
store pallet tracking information, from the other devices, regarding the pallet,
associate the scan records with the pallet tracking information,
receive an inquiry regarding one of the barcode labels on one of the produce direct-to consumer packaging, and
retrieve, in response to the inquiry, information about the one of the produce direct-to consumer packaging based on the scan records from the wireless electronic device.

7. The system of claim 6, wherein the second processor further executes instructions in the second memory to:
store geo-fencing information regarding locations of produce varieties and associate the location information in the scan records with the produce varieties based on the geo-fencing information.

8. The system of claim 6, wherein the wireless electronic device further includes a camera (380), and wherein the scan records further include an image of produce in the produce direct-to consumer packaging to which the clamshell barcode label is affixed.

9. The system of claim 6, wherein the wireless client application interface of the wireless electronic device detects a personal area network connection.

10. The system of claim 6, wherein the second processor further executes the instructions in the second memory to:
associate scan records with a common most-recent worker barcode badge scan value and generate a worker productivity report based on the associated scan records.

11. The system of claim 6, wherein the wireless electronic device further includes a microphone (308) to receive audible commands and an audio processor to convert the audible commands to text data.

12. A method, comprising:
detecting, by a wireless electronic device, a worker barcode badge, wherein the wireless electronic device includes a fastener to removably secure the wireless electronic device to a person or object;
storing, in a local memory of the wireless electronic device, a worker barcode badge scan value associated with the worker barcode badge;
detecting, by the wireless electronic device, a tray barcode label for a produce tray;
storing, in the local memory of the wireless electronic device, a tray barcode label scan value;
automatically detecting, by the wireless electronic device, a first clamshell barcode label for first produce direct-to consumer packaging;
determining, by the wireless electronic device, a location of the wireless electronic device and a scan time of detecting the first clamshell barcode label;
generating, by the wireless electronic device, a scan record, the scan record including a first clamshell barcode label value from the first clamshell barcode label associated with the tray barcode label scan value, the worker barcode badge scan value, the scan time, and the location;
storing, in the local memory of the wireless electronic device, the scan record;
detecting, by the wireless electronic device, a personal area network connection with a client application; and
automatically transmitting, by the wireless electronic device, the scan record in response to detecting the personal area network connection.

13. The method of claim 12, further comprising:
automatically detecting, by the wireless electronic device, a second clamshell barcode label for second produce direct-to consumer packaging;
determining, by the wireless electronic device, another location of the wireless electronic device and another scan time of detecting the second clamshell barcode label;
generating, by the wireless electronic device, another scan record, the other scan record including a second clamshell barcode label value from the second clamshell barcode label, the tray barcode label scan value, the worker barcode badge scan value, the other scan time, and the other location;
storing, in the local memory of the wireless electronic device, the other scan record; and
automatically uploading, by the wireless electronic device, the other scan record when the wireless electronic device detects the personal area network connection.

14. The method of claim 12, further comprising:
storing, by the client application, the scan record with other scan records from other wireless electronic devices; and
sending, by the client application, the scan record and the other scan records to a network device.

15. The method of claim 12, further comprising:
storing, by a network device, tray tracking information associating tray barcode labels on with a shipping pallet;
storing, by the network device, pallet tracking information for the shipping pallet;
associating, by the network device, the scan record with the pallet tracking information;
receiving, by the network device, an inquiry regarding the first clamshell barcode label on the first produce direct-to consumer packaging; and
retrieving, in response to the inquiry, information about the first produce direct-to consumer packaging based on the scan record.

## Patentansprüche

1. Drahtlose elektronische Vorrichtung (110), umfassend:
einen Autoerfassungs-Barcode-Scanner (320), der konfiguriert ist, um Arbeiter-Barcode-Ausweise zu erfassen, Tablett-Barcode-Etiketten auf Tabletts zu erfassen, und Greifer-Barcode-Etiketten auf in den Tabletts gelagerter Direkt-zu-Verbraucher-Produktverpackung (10) zu erfassen;
eine Positionsbestimmungseinheit (330);
eine lokale Speichereinheit (390), die konfiguriert ist, um einen zuletzt gescannten Arbeiterausweiswert und einen zuletzt gescannten Tablettetikettwert zu speichern;
einen Aufzeichnungsgenerator (360), der konfiguriert ist, um Scanaufzeichnungen zu erzeugen, wenn der Autoerfassungs-Barcode-Scanner eines der Greifer-Barcode-Etiketten erfasst, wobei jede der Scanaufzeichnungen einen Greifer-Barcode-Etikettwert, den dem Greifer-Barcode-Etikettwert zugeordneten zuletzt gescannten Tablettetikettwert, den zuletzt gescannten Arbeiter-Barcode-Ausweiswert, eine Greifer-Barcode-Etikett-Scanzeit und Positionsinformationen von der Positionsbestimmungseinheit zur Greifer-Barcode-Etikett-Scanzeit enthält, wobei die lokale Speichereinheit ferner konfiguriert ist, um die Scanaufzeichnungen zu speichern;
eine drahtlose Client-Anwendungsschnittstelle (340) zum automatischen Hochladen der Scanaufzeichnungen, wenn die drahtlose elektronische Vorrichtung eine Netzwerkverbindung mit einer Client-Anwendung erfasst; und
ein Befestigungselement (312) zum entfernbaren Befestigen der drahtlosen elektronischen Vorrichtung an einer Person oder einem Gegenstand.

2. Drahtlose elektronische Vorrichtung nach Anspruch 1, ferner umfassend einen Wettersensor (370) zum Erfassen von Wetterbedingungen in einer Nähe der drahtlosen elektronischen Vorrichtung, und wobei die Scanaufzeichnungen ferner Wetterbedingungen zur Greifer-Barcode-Etikett-Scanzeit enthalten.

3. Drahtlose elektronische Vorrichtung nach Anspruch 2, wobei der Wettersensor mindestens eines von einem Temperatursensor oder einem Feuchtigkeitssensor enthält.

4. Drahtlose elektronische Vorrichtung nach Anspruch 1, ferner umfassend eine Kamera (380), wobei die Scanaufzeichnungen ferner ein Bild von Produkt in der Direkt-zu-Verbraucher-Verpackung enthalten, an der das Greifer-Barcode-Etikett befestigt ist.

5. Drahtlose elektronische Vorrichtung nach Anspruch 4, wobei die Kamera eine hyperspektrale Kamera enthält.

6. System umfassend
eine drahtlose elektronische Vorrichtung (110) nach Anspruch 1;
eine mobile Rechenvorrichtung (120), die Folgendes enthält:
einen ersten Speicher (1030) zu Speichern von Anweisungen und einer Client-Anwendung, und
einen ersten Prozessor (1020) zum Ausführen der Anweisungen im ersten Speicher zum:
automatischen Erfassen einer Netzwerkverbindung mit der drahtlosen elektronischen Vorrichtung,
Empfangen, nach dem Erfassen, der von der drahtlosen elektronischen Vorrichtung übertragenen Scanaufzeichnungen,
Speichern, im ersten Speicher, der Scanaufzeichnungen, und
Weiterleiten, an eine Netzwerkvorrichtung, der Scanaufzeichnungen; und wobei die Netzwerkvorrichtung (230) Folgendes enthält:
einen zweiten Speicher (1030) zu Speichern von zweiten Anweisungen, und
einen zweiten Prozessor (1020) zum Ausführen der Anweisungen im zweiten Speicher zum:
Speichern von Tablett-Tracking-Informationen, von anderen Geräten, die Tablett-Barcode-Etiketten zu einer Versandpalette zuordnen,
Speichern von Paletten-Tracking-Informationen, von den anderen Geräten, bezüglich der Palette,
Zuordnen der Scanaufzeichnung zu den Paletten-Tracking-Informationen, Empfangen einer Anfrage bezüglich einem der Barcode-Etiketten auf einer der Direkt-zu-Verbraucher-Produktverpackung, und
Abrufen, als Antwort auf die Anfrage, von Informationen über eine der Direkt-zu-Verbraucher-Produktverpackung basierend auf den Scanaufzeichnungen von der drahtlosen elektronischen Vorrichtung.

7. System nach Anspruch 6, wobei der zweite Prozessor ferner Anweisungen im zweiten Speicher ausführt, zum:
Speichern von Geo-Fencing-Informationen bezüglich Positionen von Produktsorten und Zuordnen der Positionsinformationen in den Scanaufzeichnungen zu den Produktsorten basierend auf den Geo-Fencing-Informationen.

8. System nach Anspruch 6, wobei die drahtlose elektronische Vorrichtung ferner eine Kamera (380) enthält, und wobei die Scanaufzeichnungen ferner ein Bild von Produkt in der Direkt-zu-Verbraucher-Produktverpackung enthalten, an der das Greifer-Barcode-Etikett befestigt ist.

9. System nach Anspruch 6, wobei die drahtlose Client-Anwendungsschnittstelle der drahtlosen elektronischen Vorrichtung eine Personal-Area-Netzwerkverbindung erfasst.

10. System nach Anspruch 6, wobei der zweite Prozessor ferner die Anweisungen im zweiten Speicher ausführt, zum:
Zuordnen von Scanaufzeichnungen zu einem gemeinsamen letzten Arbeiter-Barcode-Ausweis-Scanwert und Erzeugen eines Arbeiterproduktivitätsberichts basierend auf den zugeordneten Scanaufzeichnungen.

11. System nach Anspruch 6, wobei die drahtlose elektronische Vorrichtung ferner ein Mikrofon (308) zum Empfangen hörbarer Befehle und einen Audioprozessor zum Umwandeln der hörbaren Befehle in Textdaten enthält.

12. Verfahren, umfassend:
Erfassen, durch eine drahtlose elektronische Vorrichtung, eines Arbeiter-Barcode-Ausweises, wobei die drahtlose elektronische Vorrichtung ein Befestigungselement zum entfernbaren Befestigen der drahtlosen elektronischen Vorrichtung an einer Person oder einem Gegenstand enthält;
Speichern, in einem lokalen Speicher der drahtlosen elektronischen Vorrichtung, eines Arbeiter-Barcode-Ausweis-Scanwerts, der dem Arbeiter-Barcode-Ausweis zugeordnet ist;
Erfassen, durch die drahtlose elektronische Vorrichtung, eines Tablett-Barcode-Etiketts für ein Produkttablett;
Speichern, in dem lokalen Speicher der drahtlosen elektronischen Vorrichtung, eines Tablett-Barcode-Etikett-Scanwerts;
automatisches Erfassen, durch die drahtlose elektronische Vorrichtung, eines ersten Greifer-Barcode-Etiketts für erste Direkt-zu-Verbraucher-Produktverpackung;
Bestimmen, durch die drahtlose elektronische Vorrichtung, einer Position der drahtlosen elektronischen Vorrichtung und einer Scanzeit des Erfassens des ersten Greifer-Barcode-Etiketts;
Erzeugen, durch die drahtlose elektronische Vorrichtung, einer Scanaufzeichnung, wobei die Scanaufzeichnung einen ersten Greifer-Barcode-Etikettwert von dem dem Tablett-Barcode-Etikett-Scanwert zugeordneten ersten Greifer-Barcode-Etikett, den Arbeiter-Barcode-Ausweis-Scanwert, die Scanzeit und die Position enthält;
Speichern, in dem lokalen Speicher der drahtlosen elektronischen Vorrichtung, der Scanaufzeichnung;
Erfassen, durch die drahtlose elektronische Vorrichtung, einer Personal-Area-Netzwerkverbindung mit einer Client-Anwendung; und
automatisches Übertragen, durch die drahtlose elektronische Vorrichtung, der Scanaufzeichnung als Antwort auf das Erfassen der Personal-Area-Netzwerkverbindung.

13. Verfahren nach Anspruch 12, ferner umfassend:
automatisches Erfassen, durch die drahtlose elektronische Vorrichtung, eines zweiten Greifer-Barcode-Etiketts für zweite Direkt-zu-Verbraucher-Produktverpackung;
Bestimmen, durch die drahtlose elektronische Vorrichtung, einer anderen Position der drahtlosen elektronischen Vorrichtung und einer anderen Scanzeit des Erfassens des zweiten Greifer-Barcode-Etiketts;
Erzeugen, durch die drahtlose elektronische Vorrichtung, einer anderen Scanaufzeichnung, wobei die andere Scanaufzeichnung einen zweiten Greifer-Barcode-Etikettwert von dem zweiten Greifer-Barcode-Etikett, den Tablett-Barcode-Etikett-Scanwert, den Arbeiter-Barcode-Ausweis-Scanwert, die andere Scanzeit und die andere Position enthält;
Speichern, in dem lokalen Speicher der drahtlosen elektronischen Vorrichtung, der anderen Scanaufzeichnung; und
automatisches Hochladen, durch die drahtlose elektronische Vorrichtung, der anderen Scanaufzeichnung, wenn die drahtlose elektronische Vorrichtung die Personal-Area-Netzwerkverbindung erfasst.

14. Verfahren nach Anspruch 12, ferner umfassend:
Speichern, durch die Client-Anwendung, der Scanaufzeichnung mit anderen Scanaufzeichnungen von anderen drahtlosen elektronischen Vorrichtungen; und
Senden, durch die Client-Anwendung, der Scanaufzeichnung und der anderen Scanaufzeichnungen an eine Netzwerkvorrichtung.

15. Verfahren nach Anspruch 12, ferner umfassend:
Speichern, durch eine Netzwerkvorrichtung, von Tablett-Tracking-Informationen, die Tablett-Barcode-Etiketten einer Versandpalette zuordnen;
Speichern, durch die Netzwerkvorrichtung, von Paletten-Tracking-Informationen für die Versandpalette;
Zuordnen, durch die Netzwerkvorrichtung, der Scanaufzeichnung zu den Paletten-Tracking-Informationen;
Empfangen, durch die Netzwerkvorrichtung, einer Anfrage bezüglich dem ersten Greifer-Barcode-Etikett auf der ersten Direkt-zu-Verbraucher-Produktverpackung; und
Abrufen, als Antwort auf die Anfrage, von Informationen über die ersten Direkt-zu-Verbraucher-Produktverpackung basierend auf der Scanaufzeichnung.

## Revendications

1. Dispositif électronique sans fil (110), comprenant :
un dispositif de balayage de code à barres à détection automatique (320) configuré pour détecter des insignes de code à barres de travailleur, détecter des étiquettes de code à barres de plateau sur des plateaux, et détecter des étiquettes de code à barres à clapet sur un emballage de consommation directe de produit (10) qui est stocké dans les plateaux ;
une unité de détermination d'emplacement (330) ;
une unité de mémoire locale (390) configurée pour stocker une valeur d'insigne de travailleur balayée la plus récente et une valeur d'étiquette de plateau balayée la plus récente ;
un générateur d'enregistrements (360) configuré pour générer des enregistrements de balayage lorsque le dispositif de balayage de code à barres à détection automatique détecte l'une des étiquettes de code à barres à clapet, chacun des enregistrements de balayage comprenant une valeur d'étiquette de code à barres à clapet, la valeur d'étiquette de plateau balayée la plus récente associée à la valeur d'étiquette de code à barres à clapet, la valeur d'insigne de code à barres de travailleur la plus récente, un moment de balayage d'étiquette de code à barres à clapet, et des informations d'emplacement à partir de l'unité de détermination d'emplacement au moment de balayage d'étiquette de code à barres à clapet, l'unité de mémoire locale étant en outre configurée pour stocker les enregistrements de balayage ;
une interface d'application client sans fil (340) pour télécharger automatiquement les enregistrements de balayage lorsque le dispositif électronique sans fil détecte une connexion réseau avec une application client ; et
une attache (312) pour fixer de manière amovible le dispositif électronique sans fil à une personne ou un objet.

2. Dispositif électronique sans fil selon la revendication 1, comprenant en outre un capteur météorologique (370) pour détecter les conditions météorologiques à proximité du dispositif électronique sans fil, et dans lequel les enregistrements de balayage comprennent en outre les conditions météorologiques au moment de balayage d'étiquette de code à barres à clapet.

3. Dispositif électronique sans fil selon la revendication 2, dans lequel le capteur météorologique comprend au moins l'un d'un capteur de température ou d'un capteur d'humidité.

4. Dispositif électronique sans fil selon la revendication 1, comprenant en outre une caméra (380), les enregistrements de balayage comprenant en outre une image de produit dans l'emballage de consommation directe auquel l'étiquette de code à barres à clapet est fixée.

5. Dispositif électronique sans fil selon la revendication 4, dans lequel la caméra comprend une caméra hyper-spectrale.

6. Système comprenant
un dispositif électronique sans fil (110) selon la revendication 1 ;
un dispositif informatique mobile (120) comprenant :
une première mémoire (1030) pour stocker des instructions et une application client, et
un premier processeur (1020) pour exécuter les instructions dans la première mémoire pour :
détecter automatiquement une connexion réseau avec le dispositif électronique sans fil,
recevoir, après la détection, les enregistrements de balayage transmis depuis le dispositif électronique sans fil,
stocker, dans la première mémoire, les enregistrements de balayage, et transmettre, à un périphérique réseau, les enregistrements de balayage ; et le périphérique réseau (230) comprenant :
une deuxième mémoire (1030) pour stocker des deuxièmes instructions, et
un deuxième processeur (1020) pour exécuter les instructions dans la deuxième mémoire pour :
stocker des informations de suivi de plateau, à partir d'autres dispositifs, associer des étiquettes de code à barres sur le plateau à une palette d'expédition, stocker des informations de suivi de palette, provenant des autres dispositifs, concernant la palette,
associer les enregistrements de balayage aux informations de suivi de palette, recevoir une interrogation concernant l'une des étiquettes de code à barres sur l'un des produits d'emballage de consommation directe, et
récupérer, en réponse à l'interrogation, des informations concernant l'un des produits d'emballage de consommation directe sur la base des enregistrements de balayage provenant du dispositif électronique sans fil.

7. Système selon la revendication 6, dans lequel le deuxième processeur exécute en outre les instructions dans la deuxième mémoire pour :
stocker des informations de géo-repérage concernant des emplacements des variétés de produit et associer les informations d'emplacement dans les enregistrements de balayage aux variétés de produit sur la base des informations de géo-repérage.

8. Système selon la revendication 6, dans lequel le dispositif électronique sans fil comprend en outre une caméra (380), les enregistrements de balayage comprenant en outre une image de produit dans l'emballage de consommation directe de produit auquel l'étiquette de code à barres à clapet est fixée.

9. Système selon la revendication 6, dans lequel l'interface d'application client sans fil du dispositif électronique sans fil détecte une connexion de réseau personnel.

10. Système selon la revendication 6, dans lequel le deuxième processeur exécute en outre les instructions dans la deuxième mémoire pour :
associer des enregistrements de balayage à une valeur de balayage d'insigne de code à barres de travailleur la plus récente commune et générer un rapport de productivité de travailleur sur la base des enregistrements de balayage associés.

11. Système selon la revendication 6, dans lequel le dispositif électronique sans fil comprend en outre un microphone (308) pour recevoir des commandes audibles et un processeur audio pour convertir les commandes audibles en données textuelles.

12. Procédé, comprenant les étapes consistant à :
détecter, par un dispositif électronique sans fil, un insigne de code à barres de travailleur, le dispositif électronique sans fil comprenant une attache pour fixer de manière amovible le dispositif électronique sans fil à une personne ou à un objet ;
stocker, dans une mémoire locale du dispositif électronique sans fil, une valeur de balayage d'insigne de code à barres de travailleur associée à l'insigne de code à barres de travailleur ;
détecter, par le dispositif électronique sans fil, une étiquette de code à barres de plateau pour un plateau de produit ;
stocker, dans la mémoire locale du dispositif électronique sans fil, une valeur de balayage d'étiquette de code à barres de plateau ;
détecter automatiquement, par le dispositif électronique sans fil, une première étiquette de code à barres à clapet pour un premier emballage de consommation directe de produit ;
déterminer, par le dispositif électronique sans fil, un emplacement du dispositif électronique sans fil et un moment de balayage de détection de la première étiquette de code à barres à clapet ;
générer, par le dispositif électronique sans fil, un enregistrement de balayage, l'enregistrement de balayage comprenant une première valeur d'étiquette de code à barres à clapet à partir de la première étiquette de code à barres à clapet associée avec la valeur de balayage d'étiquette de code à barres de plateau, la valeur de balayage d'insigne de code à barres de travailleur, le moment de balayage et l'emplacement ;
stocker, dans la mémoire locale du dispositif électronique sans fil, l'enregistrement de balayage ;
détecter, par le dispositif électronique sans fil, une connexion de réseau personnel avec une application client ; et
transmettre automatiquement, par le dispositif électronique sans fil, l'enregistrement de balayage en réponse à la détection de la connexion de réseau personnel.

13. Procédé selon la revendication 12, comprenant en outre les étapes consistant à :
détecter automatiquement, par le dispositif électronique sans fil, une deuxième étiquette de code à barres à clapet pour un deuxième emballage de consommation directe de produit ;
déterminer, par le dispositif électronique sans fil, un autre emplacement du dispositif électronique sans fil et un autre moment de balayage de détection de la deuxième étiquette de code à barres à clapet ;
générer, par le dispositif électronique sans fil, un autre enregistrement de balayage, l'autre enregistrement de balayage comprenant une deuxième valeur d'étiquette de code à barres à clapet à partir de la deuxième étiquette de code à barres à clapet, la valeur de balayage d'étiquette de code à barres de plateau, la valeur de balayage d'insigne de code à barres de travailleur, l'autre moment de balayage et l'autre emplacement ;
stocker, dans la mémoire locale du dispositif électronique sans fil, l'autre enregistrement de balayage ; et
télécharger automatiquement, par le dispositif électronique sans fil, l'autre enregistrement de balayage lorsque le dispositif électronique sans fil détecte la connexion de réseau personnel.

14. Procédé selon la revendication 12, comprenant en outre les étapes consistant à :
stocker, par l'application client, l'enregistrement de balayage avec d'autres enregistrements de balayage provenant d'autres dispositifs électroniques sans fil ; et
envoyer, par l'application client, l'enregistrement de balayage et les autres enregistrements de balayage à un périphérique réseau.

15. Procédé selon la revendication 12, comprenant en outre les étapes consistant à :
stocker, par un périphérique réseau, des informations de suivi de plateau associant des étiquettes de code à barres de plateau sur une palette d'expédition ;
stocker, par le périphérique réseau, d'informations de suivi de palette pour la palette d'expédition ;
associer, par le périphérique réseau, l'enregistrement de balayage avec les informations de suivi de palette ;
recevoir, par le périphérique réseau, une interrogation concernant la première étiquette de code à barres à clapet sur le premier emballage de consommation directe de produit ; et
récupérer, en réponse à l'interrogation, des informations concernant le premier emballage de consommation directe de produit sur la base de l'enregistrement de balayage.
